# EUROPEAN PATENT APPLICATION

(11) **EP 3 076 765 A1**
(43) Date of publication of application: **05.10.2016**
(21) Application number: 16162351.7
(22) Date of filing: 24.03.2016
(51) Int. Cl.: H05B 37/02, H05B 33/08

(54) **POWER SUPPLY FOR LAMPS AND ASSOCIATED METHODS**

(30) Priority: 30.03.2015 IT MI20150452
(71) Applicant: TCI Telecomunicazioni Italia S.r.l., 21047 Saronno (VA) (IT)
(72) Inventor: LEGNANI, Marco Alessandro, 21047 Saronno VA (IT); COLOMBO, Luca, 20025 Legnano MI (IT)
(74) Representative: Barbaro, Gaetano

(57) **Abstract**

A power supply for lamps suitable for generating at its output a regulated voltage or current for powering lamps (13), particularly LED lamps, wherein the delivered voltage or current may be regulated by pressing a push-button (PB) and the power absorption by the power supply in standby mode may be neglected or is even null, has a power converter (16) and a control circuit (15) that when the lamp (13) is on is powered by an auxiliary voltage (18) delivered by the power converter (16). The control circuit (15) comprises a tank capacitor functionally connected to the push-button (PB) in order to be charged directly by electric distribution mains (L, N, 11) bypassing the power converter (16) when the push-button (PB) is closed. The power converter (16) is connected (14) to the control circuit (15) for turning itself off when the powered lamps (13) must be turned off and for turning itself on or remaining on when the powered lamps (13) are or must be turned on.

## Description

### TECHNICAL FIELD

This disclosure relates in general to power supplies for lighting engineering and more in particular to a power supply that may be regulated suitable for LED lamps equipped with components adapted to reduce its power consumption in stand-by mode.

### BACKGROUND

Lamps used in lighting engineering, such as low voltage halogen lamps and more recently solid state LED or OLED light sources require a power supply, in order to be connected to electric distribution mains, for converting the mains voltage into a voltage or a regulated current adapted to the type of lamp to be powered.

More and more often, the possibility of adjusting luminous intensity of powered lamps is requested.

A standard adjustable power supply for lamps comprises a power converter that transforms power available at its input into a form adapted to be used by the lamp connected to its output, and a control circuit comprising a processing unit (typically a microcontroller) that interprets commands received from the outside for controlling the regulated voltage or current generated by the converter in accordance with the received commands. The power converter generates also an auxiliary voltage for powering the control circuit so as, even when the lamp is off, typically the power converter delivers the voltage requested by the control circuit.

One of the most diffused techniques employs power supplies equipped with an additional input, connected with a push-button that allows to turn on/off the powered lamp and that with a prolonged pressure allows to vary the light intensity emitted from the lamp, according a mode known by skilled person as "PUSH mode". In a known electric configuration, by closing the push-button the additional input is connected to the phase line of the distribution mains.

The control circuit is functionally connected to the additional input through an adapter and interprets the applied commands through the pressure of the push-button adjusting the power converter so as to vary light intensity of the lamp in accordance with the received commands.

When the lamp is turned off by acting on the button, there is still a power absorption from the distribution mains, known as power consumption in stand-by mode, due to the fact that the control circuit in known power supplies must always remain functioning in order to adjust the voltage delivered by the voltage converter when the turning on of the powered lamp (or lamps) is commanded. In order to keep active the control circuit, at least part of the power converter must remain functioning in order to power the control circuit, thus power absorption in standby mode does not nullify and, over long periods of time, this may lead to non negligible consumptions.

The possibility of using a battery has been contemplated for powering the control circuit when the lamp is off, so as not to absorb power in standby mode from the electric distribution mains.

This solution has several drawbacks: besides the use of a battery and of additional components for controlling its charge status, the functioning of the whole power converter when the battery is discharged must be carefully designed. This condition, in particular, makes relevantly more complicated the design of the electronic circuitry of the converter, that must contemplate this possibility and must prevent the discharged battery from hindering permanently to turn on the lamp even when the push-button is closed.

### SUMMARY

A power supply for lamps suitable for generating at its output a regulated voltage or current for powering lamps, particularly LED lamps, has been devised, wherein the delivered voltage or current may be regulated by pressing a push-button and the power absorption by the power supply in standby mode may be neglected or is even null.

This objective has been attained by the power supply of this disclosure that implements a relative control method. The power supply has a power converter and a control circuit that, when the lamp is on, is powered by an auxiliary voltage delivered by said power converter. The control circuit comprises a tank capacitor functionally connected to a push-button in order to be charged directly by electric distribution mains when the push-button is closed. The power converter is functionally connected to the control circuit for turning itself off when the powered lamps must be turned off and for turning itself on or remaining on when the powered lamps are or must be turned on.

According to this disclosure, it is possible to improve power supplies that contain a Zener diode electrically connected in series with a bias circuit connected to the push-button, by connecting a diode between the Zener diode and the tank capacitor so as to charge the tank capacitor when the Zener diode withstands a non null inverse voltage and so ad to hinder the discharge of the tank capacitor throughout the Zener diode.

The claims as filed are integral part of this specification and are herein incorporated by reference.

### BRIEF DESCRIPTION OF THE DRAWINGS

Figure 1 depicts a block diagram of a power supply realized according to this disclosure that powers a LED lamp.
Figure 2 depicts an embodiment of a control circuit of a power supply according to this disclosure.

### DETAILED DESCRIPTION

This disclosure illustrates a power supply for lighting engineering suitable for powering one or more lamps, for example of a LED type, and for regulating their luminous intensity by pressing a push-button connected to its input and characterized by a potentially null power absorption in a standby mode.

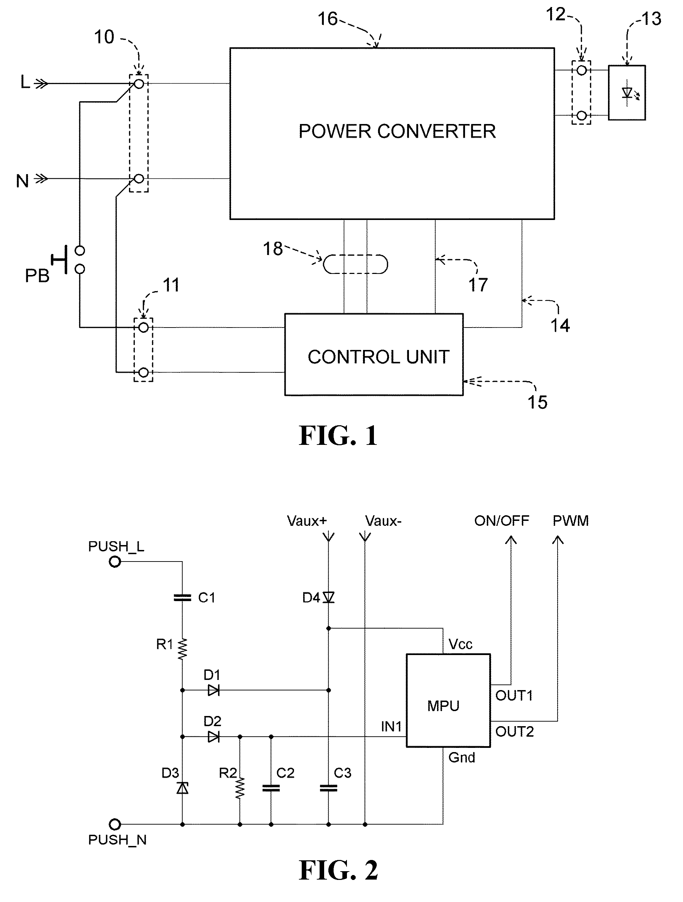

Figure 1 shows the block diagram of an embodiment of the power supply according to this disclosure.

The power converter POWER CONVERTER (16) has connection terminals (10) for connecting to electric mains (L, N), typically an electric power line at 230Vac 50Hz, output terminals (12) suitable for connection to a lamp (13), for example a LED lamp, an auxiliary output (18) to the terminals of which there is a DC auxiliary voltage Vaux suitable for powering a control circuit CONTROL UNIT (15). The power converter (16) has an input for turning on/off (14) through which it is possible to turn on/off the whole converter. Preferably, at this input a logic signal is made available that, when at a low logic level, sets the whole power converter in an off condition, in order to ensure a power absorption from the electric mains as small as possible, ideally null.

A null absorption is theoretically obtainable because the power converter (16) does not request any auxiliary voltage for supplying the control circuit (15) when the power converter (16) is turned off through the input for turning on/off (14).

The power converter (16), according to an embodiment, has a switching converter the output of which may be on-off modulated by a control line (17). By applying at the control line (17) a PWM signal, it is possible to vary the average luminous intensity emitted by the lamp (13) connected to the output terminals (12).

As an alternative, in order to regulate the luminous intensity emitted by the lamp, other methods may be used, known to skilled persons, such as for example varying the absolute value of the delivered current without PWM modulating it, or even other modulation techniques, different from a classic PWM modulation, well known to skilled persons.

In certain power supplies, the converter is composed of two stages, such as for example a PFC followed by a buck converter configured for providing at its output a constant current, and the output of the buck converter is modulated in PWM mode as well as in amplitude mode. In these cases the control line (17) used for regulating the luminous intensity emitted by a LED lamp will have a conducting line for transmitting the requested amplitude level for the value of current and a second conducting line for transmitting the PWM signal used for modulating the current in a PWM mode. This method is well known to the skilled person, it has been recalled here only for sake of completeness, and for this reason it will not be illustrated further.

The control circuit (15) is connected with distribution mains through a bypass line (11) at which the voltage made available by the electric distribution mains is applied by means of a push-button (PB). Users, by pressing the push-button (PB), adjust luminous intensity emitted by the lamp according to the well known PUSH technique by means of the control circuit. The control circuit (15), when the lamp (13) is on, is powered with the auxiliary voltage (Vaux (18) provided by the power converter (16), and has a first output connected to the input ON/OFF for turning on/off (14) in order to turn the power converter off in order to make it not absorb any power from the mains connected to the input terminals (10). It has also a second output connected to the control line (17) for on/off modulating in a PWM mode the current/voltage made delivered by the power converter to the lamp (13).

By turning off the power converter, by pressing the push-button, the auxiliary voltage Vaux is not applied to the auxiliary supply line (18) and also the control circuit (15) is turned off, thus making possible a theoretically null power absorption from the electric distribution mains connected to the input terminals (10).

The control circuit (15) is configured so as to resume, by-passing the power converter, using the voltage of the electric mains applied by pressing the push-button and to resume the power converter (16) from standby by applying a signal at the input for turning off/on (14).

A more detailed example of an embodiment of the control circuit CONTROL UNIT is depicted in figure 2.

The processing unit MPU is for example a microcontroller, for example of the type ATMEL TINY45, equipped with a digital input IN1 and with two digital outputs OUT1 and OUT2.

The terminals PUSH_Land PUSH_H constitute the bypass line at which the AC voltage of the electric distribution mains is applied through a push-button. For example the input PUSH_L is directly connected to the neutral line of the electric distribution mains, the input PUSH_H is connected to the phase line of the electric distribution mains through the regulation push-button PB pressed by users for regulating luminous intensity of the lamp 13.

By pressing the push-button PB an AC voltage is applied at the terminals PUSH_L and PUSH_H; through the capacitor C1 that limits the current absorbed by the electric mains and the resistor R1 that limits the absorbed initial current peak, the Zener diode D3 is counter-biased with a voltage, for example a 5.6V voltage.

During the half-wave that counter-biases the Zener diode, there is a reverse voltage equal to about 5.6V. Through a diode D1 (for example a diode 1N4148) the tank capacitor C3 is charged at about 5V by powering the processing unit (microcontroller) MPU that can turn itself on.

The processing unit MPU turned on generates a positive logic signal at the output OUT1 connected to the line ON/OFF used for sending to the power converter of figure 1 the command for turning off/on. The on power converter provides the auxiliary voltage Vaux applied to the auxiliary terminals Vaux+ and Vaux- (figure 2) and, through the diode D4, it powers the processing unit MPU that, in this way when the lamp (13) is on, can continue functioning even if the push-button for regulating the luminous intensity is not pressed anymore.

The voltage available at the terminals of the Zener diode D3 through the diode D2 (for example a diode 1N4148) is applied at the input IN1 of the unit MPU. The voltage at the input IN1 is used by the microcontroller for determining that the push-button is pressed and for determining the duration of the pressure and, depending on the received commands, the unit MPU generates at its output OUT2 the PWM signal the duty-cycle of which determines the luminous intensity of the lamp.

The capacitor C2 is used to filter the voltage at the input IN1 preventing disturbances or bad contacts of the push-button from causing poor functioning. The resistor R2 is used to discharge the capacitor C2 when the push-button is released.

In certain cases the capacitor C1 may be omitted by limiting the current through the resistor R1, making possible to connect also with DC voltage distribution networks.

The set of components C1, R1, D3, D2, R2, C2, compose an "adapter" that adjusts the value of the voltage at the terminals PUSH_Land PUSH_H to a value suitable for being applied at the input of the processing unit MPU.

Obvious variants for skilled persons are to be considered as comprised in the present disclosure.

## Claims

1. A power supply for lamps, comprising:
a power converter having input power terminals for connection to distribution mains, and being configured to generate a regulated voltage or a regulated current for supplying lamps and to generate an auxiliary voltage (Vaux) at auxiliary terminals,
a control circuit (CONTROL UNIT) comprising a processing unit (MPU) having supply pins connected to said auxiliary terminals, and having a tank capacitor (C3) configured to hold said auxiliary voltage (Vaux) and to supply said processing unit (MPU), said control circuit (CONTROL UNIT) being configured to generate a control signal (PWM) for controlling the regulated voltage or regulated current generated by the converter between a maximum level of full illumination and a minimum turn off level for turning off lamps depending on closure of a push-button (PB),
**characterized in that**
said control circuit is configured to generate a logic signal (ON/OFF) that has either a first logic level when said control signal (PWM) correspond to said minimum turn off level or a second logic level when said control signal (PWM) corresponds to an on voltage or an on current for lamps;
said power converter is functionally connected to the control circuit for being turned off and nullifying said auxiliary voltage (Vaux) when said logic signal (ON/OFF) assumes the first logic level, and for being turned on or remaining on and generating said nonnull auxiliary voltage (Vaux) when said logic signal (ON/OFF) assumes the second logic level;
said power supply comprises a current path including said push-button (PB), said current path being configured to connect said supply pins of the processing unit (MPU) directly to the distribution mains and to charge said tank capacitor (C3) when the push-button (PB) is closed.

2. The power supply according to claim 1, wherein said control circuit comprises:
a Zener diode electrically connected in series to a bias circuit connected to said push-button (PB),
a first diode (D1) configured to charge said tank capacitor (C3) when said Zener diode withstands a non null inverse voltage and to prevent discharge of the tank capacitor (C3) throughout the Zener diode.

3. The power supply according to claim 2, wherein said bias circuit comprises a resistor (R1), or a fourth capacitor (C1) electrically connected in series to a resistor (R1).

4. The power supply according to claim 2, wherein:
said control circuit comprises:
- a third capacitor (C2) configured to be charged with said non null inverse voltage withstood by the Zener diode,
- a discharge resistor (R2) electrically connected in parallel to said third capacitor (C2),
- a third diode (D2) functionally connected to prevent discharge of said third capacitor (C2) throughout said Zener diode;
said processing unit (MPU) is functionally connected to said third capacitor (C2) to sense charge/discharge cycles of said third capacitor (C2).

5. The power supply according to one of claims from 1 to 4, wherein:
said tank capacitor (C3) is connected to one of said auxiliary terminals through a second diode (D4) configured to prevent the tank capacitor (C3) from discharging throughout the power converter.

6. A control method of a power supply for lamps, the power supply comprising:
a power converter having input power terminals for connection to distribution mains, and being configured to generate a regulated voltage or a regulated current for supplying lamps and to generate an auxiliary voltage (Vaux) at auxiliary terminals,
a control circuit (CONTROL UNIT) comprising a processing unit (MPU) having supply pins connected to said auxiliary terminals, and having a tank capacitor (C3) configured to hold said auxiliary voltage (Vaux) and to supply said processing unit (MPU), said control circuit (CONTROL UNIT) being configured to generate a control signal (PWM) for controlling the regulated voltage or regulated current generated by the converter between a maximum level of full illumination and a minimum turn off level for turning off lamps depending on closure of a push-button (PB),
said control circuit being configured to generate a logic signal (ON/OFF) that has either a first logic level when said control signal (PWM) correspond to said minimum turn off level or a second logic level when said control signal (PWM) corresponds to an on voltage or an on current for lamps,
said power converter being functionally connected to the control circuit for being turned off and nullifying said auxiliary voltage (Vaux) when said logic signal (ON/OFF) assumes the first logic level, and for being turned on or remaining on and generating said nonnull auxiliary voltage (Vaux) when said logic signal (ON/OFF) assumes the second logic level,
said power supply comprising a current path including said push-button (PB), said current path being configured to connect said supply pins of the processing unit (MPU) directly to the distribution mains and to charge said tank capacitor (C3) when the push-button (PB) is closed,
said method comprising the following steps:
turning off said power converter and nullifying said auxiliary voltage (Vaux) when said regulated voltage is set at said minimum turn off level;
turning on said power converter throughout the following steps:
- closing said push-button (PB) for charging the tank capacitor (C3) and for powering said processing unit (MPU);
- generating by means of said processing unit (MPU) said control signal corresponding to an on voltage or an on current for lamps.

7. A method for improving a power supply for lamps, the power supply comprising:
a power converter having input power terminals for connection to distribution mains, and being configured to generate a regulated voltage or a regulated current for supplying lamps and to generate an auxiliary voltage (Vaux) at auxiliary terminals,
a control circuit (CONTROL UNIT) comprising a processing unit (MPU) having supply pins connected to said auxiliary terminals, and having a tank capacitor (C3) configured to hold said auxiliary voltage (Vaux) and to supply said processing unit (MPU), said control circuit (CONTROL UNIT) being configured to generate a control signal (PWM) for controlling the regulated voltage or regulated current generated by the converter between a maximum level of full illumination and a minimum turn off level for turning off lamps depending on closure of a push-button (PB),
said control circuit being configured to generate a logic signal (ON/OFF) that has either a first logic level when said control signal (PWM) correspond to said minimum turn off level or a second logic level when said control signal (PWM) corresponds to an on voltage or an on current for lamps,
said power converter being functionally connected to the control circuit for being turned off and nullifying said auxiliary voltage (Vaux) when said logic signal (ON/OFF) assumes the first logic level, and for being turned on or remaining on and generating said nonnull auxiliary voltage (Vaux) when said logic signal (ON/OFF) assumes the second logic level,
said power supply comprising a current path including said push-button (PB), said control circuit comprising a Zener diode electrically connected in series to a bias circuit connected to said push-button (PB),
**said method comprising the step of**
connecting a first diode (D1) between said Zener diode and the tank capacitor (C3) for charging said tank capacitor (C3) when said Zener diode withstands a non null inverse voltage and for preventing discharge of the tank capacitor (C3) throughout the Zener diode.
